# EUROPÄISCHE PATENTSCHRIFT

(11) **EP 4 290 194 B1**
(45) Veröffentlichungstag und Bekanntmachung des Hinweises auf die Patenterteilung: **06.11.2024**
(21) Anmeldenummer: 23175802.0
(22) Anmeldetag: 26.05.2023
(51) Int. Cl.: G01G 7/04, G01G 23/00

(54) **WAAGE MIT ÜBERLASTDETEKTION**
SCALE WITH OVERLOAD DETECTION
BALANCE AVEC DÉTECTION DE SURCHARGE

(30) Priorität: 10.06.2022 DE 102022114697
(43) Veröffentlichungstag der Anmeldung: 13.12.2023
(73) Patentinhaber: WIPOTEC GmbH, 67657 Kaiserslautern (DE)
(72) Erfinder: Gottfriedsen, Jan, 67714 Waldfischbach-Burgalben (DE); Schmitt, Frank, 66851 Mittelbrunn (DE)
(74) Vertreter: Eder Schieschke & Partner mbB

(56) Entgegenhaltungen:
- EP-A1- 3 671 143

## Beschreibung

Die vorliegende Erfindung betrifft eine Waage, die nach dem Prinzip der elektrodynamischen Kraftkompensation arbeitet.

Derartige Waagen sind aus dem Stand der Technik bekannt und basieren darauf, dass eine über einen Lastaufnehmer in eine Wägezelle eingebrachte Kraft kompensiert wird mithilfe einer elektrischen Spule und einem mit der Spule wechselwirkenden Magneten. Der für diese Kraftkompensation erforderliche und durch die Spule fließende Strom ist ein Maß für die Kraft und wird daher gemessen. Zur Messung des Spulenstroms kann dieser beispielsweise durch einen Messwiderstand geleitet werden, an dem eine vom Strom abhängige Spannung abfällt. Diese Spannung kann zur Auswertung weiterverarbeitet werden, beispielsweise indem sie - gegebenenfalls gefiltert und/oder verstärkt und/oder in sonstiger Weise vorbehandelt - einem ersten A/D-Wandler zugeführt und in Verbindung mit einer zugehörigen Steuereinheit in einen der kompensierten Kraft entsprechenden Anzeigewert umgewandelt wird.

Die EP 3 671 143 A1 offenbart eine Waage, die nach dem Prinzip der elektromagnetischen Kraftkompensation arbeitet.

Der durch die Spule geleitete Spulenstrom wird von einer Endstufe geliefert, welche eine geregelte Ausgangsspannung bereitstellt. Die Regelung der Ausgangsspannung erfolgt mithilfe eines Lagesensors. Dieser erfasst in Bezug auf eine definierte Ruhelage Relativbewegungen zwischen Spule und Magnet, die von der Größe der zu messenden Kraft abhängig sind. Der Regler regelt die Ausgangsspannung der Endstufe so, dass der resultierende, durch die Spule geleitete Strom die Relativbewegung durch elektrodynamische Wechselwirkung mit dem Magneten kompensiert und Spule und Magnet relativ zueinander und entgegen der einwirkenden Kraft wieder in die Ruhelage zurückbewegt werden. In der Regel wirkt die zu messende Kraft direkt (direkt tragende Systeme) oder über einen oder mehrere Hebel auf die Spule ein, während der Magnet ortsfest gehalten ist. Andere bzw. umgekehrte Lösungen sind jedoch ebenfalls denkbar.

Der von der Endstufe zu liefernde Strom hängt somit von der Größe der zu kompensierenden Kraft ab und wird mit zunehmender Kraft entsprechend immer größer. Für den regulären Wägebetrieb (im Weiteren auch Messmodus "m" genannt) ist die Wägezelle auf einen vorgegebenen Belastungsbereich eingestellt, der beispielsweise durch die Leistungsfähigkeit der Endstufe oder den Last-Messbereich des ersten A/D-Wandlers bestimmt wird und sich danach richtet, welche Kräfte Fₘ vernünftigerweise zu erwarten und zu kompensieren sind. Liegt eine die Wägezelle beaufschlagende Kraft außerhalb (insbesondere oberhalb) dieses Belastungsbereichs (im Weiteren auch Überlastung "u" genannt), dann
a) übersteigt die dem Spulenstrom zugehörige Spannung des Messwiderstands den am ersten A/D-Wandler vorgesehenen Last-Messbereich, und/oder
b) die Leistungsfähigkeit der Endstufe reicht nicht mehr aus, um den nötigen Kompensationsstrom an die Spule zu liefern. Die Relativbewegung kann nicht mehr kompensiert werden und der am Messwiderstand abfallende Spulenstrom ist kein korrektes Maß mehr für die in den Lastaufnehmer eingebrachte Kraft.

Eine Überlastung der Waage kann in der Praxis häufig vorkommen, zum Beispiel weil ein Greifer/Schieber/Bediener das Messobjekt zu hart oder zu schnell, schlagartig oder mit zu viel Kraft auf die Waage aufbringt. Dies kann zu Schäden an der Wägezelle und zur Beeinträchtigung ihrer Lebensdauer führen, was der Waage zunächst jedoch nicht anzusehen ist. Außerdem ist es aus eichrechtlichen Gründen nicht zulässig, oberhalb eines vorgesehenen Last-Messbereichs Gewichtsmesswerte auszugeben. Das könnte zwar dadurch verhindert werden, dass bei Überschreitung eines innerhalb des Last-Messbereichs gewählten oberen Schwellwertes die Ausgabe des Gewichtsmesswertes unterbunden wird. Daraus ist jedoch keinerlei genauere Information über die Art der Überlastung abzuleiten. Bei der Lebensdauerabschätzung eines gravimetrisch arbeitenden Messgeräts spielen jedoch insbesondere die Art, die Höhe, die Häufigkeit und die zeitliche Abfolge der Überlastungen eine Rolle.

Aufgabe der Erfindung war es daher, unter Nutzung des bereits vorhandenen Messsystems einer kraftkompensierenden Waage detailliertere Aussagen über eine auftretende Überlastung treffen zu können. Die Aufgabe wird gelöst durch eine Waage nach Anspruch 1 und ein Verfahren nach Anspruch 10. Weitere vorteilhafte Ausführungsformen ergeben sich aus den Unteransprüchen.

Die Erfindung geht von der Erkenntnis aus, dass zur genaueren Analyse von Überlastungen auch deren tatsächliche Größe erfasst werden sollte. Dies ist - wie vorstehend gezeigt - im Stand der Technik dann nicht möglich, wenn der vorgesehene Last-Messbereich des verwendeten ersten A/D-Wandlers überschritten und/oder die Leistung der Endstufe bei vorgegebener Spulen- und Messwiderstands-Konfiguration nicht ausreicht, um den für die Überlast erforderlichen Kompensations-Spulenstrom zu liefern.

Erfindungsgemäß wird dieses Problem dadurch gelöst, dass die Waage beim Auftreten einer Überlast oder bei Erreichen eines diese Überlast ankündigenden Schwellwertes in einen Überlastmodus umgeschaltet wird. Dazu wird der von der Spule und zumindest einem Messwiderstand gebildete elektrische Lastwiderstand Rw verändert, insbesondere reduziert. Bevorzugt geschieht dies automatisch. Weiterhin vorteilhaft erfolgt die Umschaltung in Sekundenbruchteilen mithilfe einer Steuereinheit, welche geeignete Schaltungsmaßnahmen in der Wagenelektronik vornimmt. Durch die Reduzierung des Lastwiderstands wird dem Spulenstrom insgesamt ein geringerer Widerstand entgegengesetzt, sodass eine verringerte Spannung genügt, um beispielsweise den gleichen Spulenstrom aufrechtzuerhalten. Entsprechend verringert sich die an der Endstufe geregelte Endstufenspannung Uε und damit die dort abgerufene Leistung. In anderen Worten: Um einen bestimmten Spulenstrom I_{L} liefern zu können, genügt gemäß Uε = I_{L} • Rw bei verringertem Lastwiderstand entsprechend eine geringere Endstufenspannung bei entsprechend geringerer Leistung P = U_{E} • I_{L}. Daraus folgt wiederum, dass die Endstufe im Überlastmodus (also bei verringertem Lastwiderstand Rw) unter Nutzung ihrer gesamten Leistungsfähigkeit zur Lieferung eines höheren Spulenstroms in der Lage ist, als dies beim im Messmodus wirkenden höheren Lastwiderstand möglich wäre - die Tragfähigkeit des Systems wird erfindungsgemäß also durch Umschaltung in den Überlastmodus erhöht. Unter diesen Umständen kann auch bei einer Kraft außerhalb des für den regulären Betrieb vorgesehenen Lastbereichs ein Spulenstrom geliefert werden, der diese Last korrekt abbildet. Die Umschaltung erfolgt erfindungsgemäß, um auch beim Auftreten von Überlasten die Bewegung der Spule relativ zum Magneten zu minimieren oder ganz zu vermeiden und einen der Überlast entsprechenden Messwert ermitteln zu können. Vorteilhafterweise kann dazu das bereits vorhandene Messsystem der Waage, insbesondere dessen Endstufe, nahezu unverändert verwendet werden. Insbesondere ist keine umschaltbare Stromquelle erforderlich, die je nach Lastfall zwischen einer höheren und niedrigeren Leistung umgeschaltet werden muss. Stattdessen kann jede Endstufe verwendet werden, deren Leistung dazu ausreicht, auch in einem Überlastfall einen ausreichend hohen Kompensationsstrom zu liefern.

Besonders vorteilhaft erfolgt die Reduzierung des Lastwiderstands Rw dadurch, dass der elektrische Widerstand R₁ desjenigen Messwiderstands W₁ reduziert wird, an dem die Spannung für die Auswertung des Spulenstroms I_{L} abgegriffen und beispielsweise einem ersten A/D-Wandler zugeführt wird. Reduziert sich dieser elektrische Widerstand R_{W1}, so reduziert sich auch die daran abfallende Messwiderstandsspannung U_{W1} mit der Folge, dass eine Last-Messbereichsüberschreitung des A/D-Wandlers auch bei Überlast vermieden und ein der Überlastkraft zugehöriger Messwert mit dem bestehenden ersten A/D-Wandler ermittelt werden kann.

Damit überwindet die Erfindung eine Denkhürde: Ein großer elektrischer Messwiderstand R_{W1} generiert eine entsprechend große daran abfallende Messwiderstandsspannung U_{W1}, mit entsprechend möglicher großer Auflösung bzw. Anzeigegenauigkeit für die innerhalb des regulären Last-Messbereichs erfassten Spannungen. Im regulären Betrieb bzw. Messmodus (m) interessiert diese hohe Auflösung, um genaue Gewichtswerte ausgeben zu können. Für den Überlastmodus wendet sich die Erfindung jedoch von diesem Erfordernis ab, und ermöglicht dadurch die Erweiterung der Traglast der Waage und/oder die Auswertung von Überlastkräften.

Erfindungsgemäß kann daher ein bestehendes, für einen vorgegebenen "regulären" Last-Messbereich bzw. Messbetrieb (Messmodus "m") vorgesehenes Messsystem auf sehr einfache Weise genutzt werden, um auch Kräfte außerhalb des vorgesehenen Last-Messbereichs (Überlast-Kraft) quantitativ zu ermitteln. Die Reduzierung des Messwiderstand W₁ kann dabei auf sehr einfache Weise vorbereitet und umgesetzt werden, die nachfolgend noch beschrieben wird.

Die erfindungsgemäße Waage ist ausgebildet zur Ermittlung einer auf die Waage einwirkenden Kraft Fₘ, Fᵤ und arbeitet nach dem Prinzip der elektrodynamischen Kraftkompensation (die gelegentlich auch als elektromagnetische Kraftkompensation bezeichnet wird). Sie umfasst eine Tragspule L und einen mit der Tragspule L wechselwirkenden und relativ zu ihr beweglichen Magneten G. Von einer Endstufe E ist der Tragspule L ein Tragspulenstrom I_{L} zuführbar, um durch elektrodynamische Wechselwirkung zwischen Spule L und Magnet G die Kraft zu kompensieren und den Spulenstrom I_{L} zur Ermittlung der Kraft auswerten zu können

Die Waage umfasst eine Widerstandsanordnung W, welche für einen von der Endstufe E gespeisten Tragspulenstromkreis einen Lastwiderstand mit einem elektrischen Widerstand Rw bildet. Die Widerstandsanordnung W umfasst zumindest die Tragspule L mit ihrem elektrischen Widerstand R_{L} sowie wenigstens einen Messwiderstand W₁ mit seinem elektrischen Widerstand R_{W1}. Die Tragspule kann dabei auch aus mehreren Teil-Spulen gebildet werden.

Die Waage ist dazu ausgebildet, in einem Messmodus (m) für Kräfte Fₘ innerhalb eines vorgegebenen Belastungsbereichs aus einer am Messwiderstand W₁ abfallenden Messwiderstandsspannung U_{W1} einen der jeweiligen Kraft Fₘ zugehörigen Messwert zu ermitteln. Erfindungsgemäß ist die Waage außerdem dazu ausgebildet, bei Überlast-Kräften Fᵤ, welche den vorgegebenen Belastungsbereich überschreiten (Überlastung), zur quantitativen Erfassung der Überlast-Kraft Fᵤ aus dem Messmodus (m) in einen Überlastmodus (u) umzuschalten. Dies geschieht, indem der elektrische Lastwiderstand Rw bei Überlastung reduziert wird (Lastwiderstandsreduzierung) und die Endstufe E die Tragspule L mit einem die Überlast-Kraft Fᵤ kompensierenden Überlastspulenstrom I_{Lu} versorgt. ("Überlastkraft" bezeichnet dabei die gesamte, auf die Wägezelle einwirkende Kraft, die sich aus dem Anteil innerhalb des vorgesehenen Last-Messbereichs und dem Anteil oberhalb bzw. unterhalb dieses Last-Messbereichs zusammensetzt). Vorzugsweise erfolgt die Umschaltung vom Messmodus in den Überlastmodus und/oder zurück automatisch.

Das Auftreten einer Überlastkraft bzw. die Notwendigkeit zum Umschalten in den Überlastmodus (u) kann beispielsweise dadurch erkannt werden, dass die Messwiderstandsspannung U_{W1} einen vorgebbaren oberen Schwellwert des Last-Messbereichs B_{A1} des ersten AD-Wandlers A₁ überschreitet. Dieser Schwellwert kann innerhalb des Last-Messbereichs B_{A1} liegen mit einem vorgebbaren Abstand zum Last-Messbereichsrand. Als Kriterium kann aber auch der Fall dienen, dass die Messwiderstandsspannung die Grenze des Last-Messbereichs B_{A1} erreicht.

Auch die quantitative Ermittlung der Überlast-Kraft kann mit dem im Messmodus verwendeten ersten A/D-Wandler erfolgen, indem ihm - genau wie im Messmodus - die am Messwiderstand abfallende Spannung auch im Überlastmodus (u) zur Auswertung zugeführt wird. Erfolgt die Reduzierung des Lastwiderstands Rw durch Reduzierung des Messwiderstands R_{W1}, dann reduziert sich auch die am Messwiderstand W₁ abfallende Spannung. Sie kann dann je nach Wert des geänderten elektrischen Widerstands R_{W1} trotz höherem Spulenstrom wegen Überlast innerhalb des vorgesehenen Last-Messbereichs des ersten A/D-Wandlers bleiben. Faktisch ergibt sich durch die Reduzierung des Messwiderstands eine Last-Messbereichserweiterung für die am Messwiderstand W₁ abgegriffene und dem ersten A/D-Wandler zugeführte Spannung U_{W1} mit entsprechend geringerer Auflösung. Hierzu ein Beispiel:
Wird im regulären Messmodus eine oberhalb des vorgesehenen Belastungsbereichs liegende Kraft Fᵤ (Überlastkraft) auf die Wägezelle eingebracht, so steigt der von der geregelten Endstufe gelieferte Spulenstrom zunächst an, um die erforderliche Kompensationskraft zwischen Spule und Magnet zu erzeugen. Erreicht die dabei am Messwiderstand W₁ abgegriffene Messwiderstandsspannung U_{W1} einen vorgegebenen, eine Überlast signalisierenden, Schwellwert, so könnte der elektrische Widerstand R_{W1} des Messwiderstands W₁ beispielsweise automatisch und möglichst sofort um 50 % reduziert werden. Die Kraft Fₘ, Fᵤ und damit auch der erforderliche Kompensation-Spulenstrom I_{L} ändert sich unmittelbar im Moment der Umschaltung nicht, allerdings reduziert sich infolge der Widerstandsreduzierung nun auch die am Messwiderstand abfallende Messwiderstandsspannung um 50 %. Der am Messwiderstand angeschlossene erste A/D-Wandler kann daher weiter innerhalb seines vorgesehenen Last-Messbereichs arbeiten. In Kenntnis der Umschaltung in den Überlastmodus wäre der nun vom A/D-Wandler ausgegebene Wert mit dem Faktor 2 zu multiplizieren, um einen der Überlast entsprechenden Messwert zu berechnen. Steigt die Überlastkraft Fᵤ weiter an, so kann die Endstufe den dafür erforderlichen Kompensationsstrom aufgrund des reduzierten Messwiderstands ohne Schwierigkeiten liefern (im genannten Beispiel etwa bis zum zweifachen des im Messmodus möglichen Kompensationsstromes, wobei der elektrische Widerstand der Spule und weiterer Komponenten hier der Einfachheit halber nicht berücksichtigt wurde und der Messwiderstand W₁ hier den wesentlichen elektrischen Widerstand der Widerstandsanordnung W bildet).
Wird die Wägezelle wieder so weit entlastet, dass ein vorgegebener unterer Schwellwert des Last-Messbereichs B_{A1} des ersten A/D-Wandlers A₁ unterschritten wird, kann dies als Kriterium für die Rückkehr in den Messmodus gelten, woraufhin der Messwiderstand W₁ wieder auf seinen ursprünglichen elektrischen Widerstandswert R_{W1} geändert wird.

Statt über den ersten A/D-Wandler kann das Erfordernis zum Umschalten in den Überlastmodus auch mithilfe eines vom ersten A/D-Wandler unabhängigen zweiten A/D-Wandlers mit einem Last-Messbereich B_{A2} erfasst werden. Diesem zweiten AD-Wandler A₂ mit einem Last-Messbereich (B_{A2}) kann im Messmodus (m) eine an der Widerstandsanordnung (W) abgegriffene Hilfsspannung (U_{H}) zugeführt werden, um bei Überschreiten eines vorgegebenen oberen Schwellwertes bzw. bei Unterschreiten eines vorgegebenen unteren Schwellwertes die Umschaltung in den Überlastmodus oder zurück in den Messmodus auszulösen. Die abgegriffene Spannung kann die Messwiderstandsspannung U_{W1} oder auch eine andere, sich in Abhängigkeit des Spulenstroms verändernde Hilfsspannung U_{H} sein. Auch der quantitative Wert der Überlastkraft lässt sich statt mit dem ersten auch mithilfe des zweiten A/D-Wandlers ermitteln. Die Verwendung eines vom ersten A/D-Wandler unabhängigen zweiten A/D-Wandlers hat mehrere Vorteile:
- Dem zweiten A/D-Wandler kann eine beliebig an der Widerstandsanordnung abgegriffene, Spulenstrom-abhängige Hilfsspannung U_{H} zugeführt werden, es muss sich nicht um die Widerstandsspannung U_{W1} handeln. Beispielsweise könnte an einem im Tragspulenstromkreis angeordneten Zusatzwiderstand W₂ die daran abfallende Zusatzwiderstandsspannung U_{W2} als Hilfsspannung U_{H} dem zweiten A/D-Wandler zugeführt werden. Wird der elektrische Widerstand R_{W2} dieses Zusatzwiderstands beim Umschalten zwischen Messmodus und Überlastmodus nicht verändert, so liefert er unabhängig vom Betriebsmodus eine den Spulenstrom I_{L} repräsentierende Spannung, die durchgehend zur Ermittlung des Spulenstroms bzw. der jeweils wirkenden Kraft ausgewertet werden kann.
- Der zweite A/D-Wandler kann einen Last-Messbereich umfassen, der sich an den Last-Messbereich des ersten A/D-Wandlers anschließt oder diesen teilweise oder vollständig umfasst. So könnte eine Überlastkraft mit dem zweiten A/D-Wandler ermittelt werden, die außerhalb des Last-Messbereichs des ersten A/D-Wandlers liegt.
- Das Umschalte-Kriterium vom Messmodus in den Überlastmodus und zurück kann ausschließlich durch Auswertung des zweiten A/D-Wandlers ermittelt werden, während der erste A/D-Wandler ausschließlich zur Ermittlung von Kräften im Messmodus mit darauf zugeschnittenem Last-Messbereich verwendet wird (Denkbar ist es im Übrigen auch, das Umschalte-Erfordernis vom Messmodus (m) in den Überlastmodus (u) mit einem ersten A/D-Wandler und das Kriterium zur Rückschaltung in den Messmodus (m) mithilfe eines zweiten A/D-Wandlers zu überprüfen, beispielsweise durch jeweils dort festgelegte Schwellwerte).

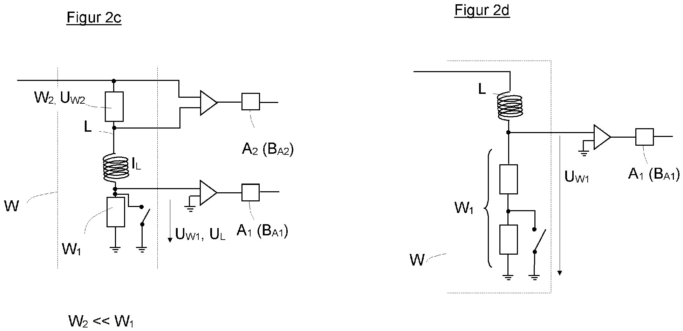

Eine besonders bevorzugte, in Figur 2c dargestellte, Ausführungsform der Erfindung sieht dementsprechend vor, dass die im Messmodus (m) am Messwiderstand abgegriffene Spannung zur Verarbeitung bzw. Auswertung einem ersten A/D-Wandler zugeführt wird, während dazu im Überlastmodus (u) ein vom ersten A/D-Wandler getrennter zweiter A/D-Wandler verwendet wird. Dem zweiten A/D-Wandler wird dabei eine Spannung zugeführt, welche an einem vom Messwiderstand verschiedenen Zusatzwiderstand abgegriffen wird. Vorzugsweise umfasst der Zusatzwiderstand nicht die Spule. Weiterhin vorzugsweise ist der elektrische Widerstand R_{W2} des Zusatzwiderstands sehr viel kleiner als der elektrische Widerstand R_{W1} des Messwiderstands R₁ (Der elektrische Widerstand R_{W1} des Messwiderstand R₁ kann beispielsweise 20, 50 oder 100 mal so groß sein wie der elektrische Widerstand R_{W2} des Zusatzwiderstands R₂.)

Diese Ausführungsform kann weiterhin so gestaltet sein, dass der Messwiderstand beim Umschalten in den Überlastmodus (u) kurzgeschlossen wird. Das führt dazu, dass sich bei einem beispielhaften elektrischen Widerstandsverhältnis R_{W2}/ R_{W1} = 1/100 der Lastwiderstand R_{W} auf etwa 1/100 des vorherigen Wertes reduziert (die elektrischen Widerstände der weiteren Komponenten in der Widerstandsanordnung, insbesondere der Spule, bleiben dabei in vereinfachter Betrachtung unberücksichtigt). Die Endstufe kann nun einen bis zu hundertmal größeren Überlast-Spulenstrom liefern im Vergleich zum Messmodus, um die von der Überlast angestrebte Relativbewegung zwischen Magnet und Spule zu kompensieren. Andere Widerstandsverhältnisse oder Arten der Widerstandsreduzierung beeinflussen das grundsätzliche erfinderische Prinzip nicht, sondern bedingen allenfalls andere maximale Kompensationsströme I_{Lu}.

Die dabei am Zusatzwiderstand W₂ abgegriffene Spannung wird dem zweiten A/D-Wandler zugeführt und ausgewertet. Die erzielbare Auflösung für die Ermittlung der Überlastkraft mithilfe des zweiten A/D-Wandlers ist zwar aufgrund des geringeren elektrischen Widerstands R_{W2} deutlich geringer, dafür erweitert sich der Last-Messbereich jedoch erheblich. Beim vorstehend beispielhaft genannten Widerstandsverhältnis R_{W2} / R_{W1} = 1/100 könnte eine Überlast-Kraft Fᵤ quantitativ bestimmt werden, die bis zu hundertmal größer ist als eine im Messmodus mittels Messwiderstand W₁ und erstem A/D-Wandler ermittelte, innerhalb des vorgegebenen Belastungsbereichs liegende Kraft Fₘ.

Die Erfindung beruht auf der Idee, den elektrischen Widerstand Rw der Widerstandsanordnung W (Lastwiderstand) im Falle einer Überlast zu verändern, insbesondere zu reduzieren, um bei vorgegebener und vorzugsweise unveränderlicher maximaler Leistungsfähigkeit der Endstufe einen im Vergleich zum Messmodus (m) höheren Spulenstrom im Überlastmodus (u) bereitstellen zu können.

Unterschiedliche Varianten zur Veränderung des elektrischen Widerstands Rw sind dabei denkbar, und grundsätzlich kommt jede den Lastwiderstand mit ausbildende elektrische Komponente infrage, um durch Einflussnahme auf ihren elektrischen Widerstand den gesamten Lastwiderstand zu reduzieren. Nach einer bevorzugten Ausführungsform der Erfindung wird der elektrische Messwiderstand R_{W1}, der gemeinsam mit der Spule L und gegebenenfalls weiteren Komponenten den elektrischen Widerstand Rw der Widerstandsanordnung W bildet, reduziert, da sich dadurch auch die am Messwiderstand W₁ abgegriffene und zur Auswertung einem ersten A/D-Wandler zugeführte Messwiderstandsspannung U_{W1} reduziert.

Der Messwiderstand W₁ kann beispielsweise reduziert werden,
a) indem der Spulenstrom auf einen vom Messwiderstand W₁ verschiedenen Zusatzwiderstand W₂ mit geringerem elektrischen Widerstand R_{W2} umgeschaltet wird (R_{W1} > R_{W2}), so dass der Messwiderstand W₁ schaltungstechnisch durch den Zusatzwiderstand W₂ ersetzt wird, oder
b) indem ein Zusatzwiderstand W₂ zum Messwiderstand W₁ parallel geschaltet wird, sodass sich der Spulenstrom auf beide Widerstände aufteilt, oder
c) indem wenigstens zwei in Reihe geschaltete Einzelwiderstände gemeinsam den Messwiderstand W₁ bilden und wenigsten einer dieser Einzelwiderstände reduziert oder kurzgeschlossen wird.

Unter "Reduzierung" eines Widerstands ist im Sinne dieser Anmeldung die Verringerung seines elektrischen Widerstands zu verstehen. Einige Schaltungsbeispiele dazu sind in den Figuren dargestellt. Der Fachmann ist allerdings nicht auf die vorgenannten Ausführungsbeispiele beschränkt und kann auch andere Schaltungsvarianten wählen, um den elektrischen Messwiderstand R_{W1} zu reduzieren. Anstatt den Messwiderstand W₁ zu reduzieren, kann der Lastwiderstand W auch dadurch verändert, insbesondere reduziert werden, dass andere elektrische Komponenten innerhalb der Widerstandsanordnung verändert werden, während der Spulenstrom durch den Messwiderstand beispielsweise unverändert bleibt. Zwar lässt sich die Messwiderstandsspannung Uwi am ersten A/D-Wandler in diesem Fall nicht anders nutzen als im Messmodus, der elektrische Widerstand Rw der Widerstandsanordnung W insgesamt wird jedoch geringer, sodass auch in diesem Fall die Endstufe einen höheren Spulenstrom I_{Lu} liefern kann. Ein zweiter A/D-Wandler mit geeignetem Last-Messbereich könnte dann einen der Überlastkraft entsprechenden höheren Strom mithilfe einer Hilfsspannung U_{H} - wie oben beschrieben - erfassen und zur Ausgabe eines der Überlastkraft entsprechenden Signals auswerten.

Die Größe des bei gegebener Endstufenleistung maximal lieferbaren Spulenstroms richtet sich nach dem elektrischen Gesamtwiderstand der Widerstandsanordnung. Eine vorzugsweise gewählte Reduzierung des Widerstands bei der Umschaltung in den Überlastmodus um beispielsweise 20% verändert den maximal möglichen Spulenstrom um den Faktor 1,25. Eine vorzugsweise gewählte Reduzierung um 50 % verdoppelt entsprechend den maximal möglichen Spulenstrom. In diesem Fall kann gegenüber dem regulären Messmodus an der Spule eine doppelt so große Kompensationskraft erzeugt werden, die zur Bestimmung der Überlastkraft ausgewertet werden kann. Nach einer noch mehr bevorzugten Ausführungsform reduziert sich der elektrische Widerstand der Widerstandsordnung um mindestens 80 %, und besonders bevorzugt um mindestens 90 %. Höchst vorzugsweise beträgt die Reduzierung sogar 95 % oder mehr. Im letztgenannten Fall wäre die Waage zur Kompensation einer Überlastkraft Fᵤ ausgebildet, die dem 20 -Fachen der im Messmodus maximal erwarteten und kompensierbaren Kraft Fₘ entspricht.

Zur Umsetzung der erfindungsgemäßen Idee ist es zweckmäßig, die Endstufe so auszubilden, dass sich der im Messmodus (m) durch die Widerstandsanordnung W fließende Strom I_{L} im Überlastmodus (u) mindestens verdoppeln, vorzugsweise verfünffachen, höchst bevorzugt verzwanzigfachen kann.

Ein besonders vorteilhaftes Merkmal der Erfindung liegt darin, dass die Umschaltung aus dem Messmodus in den Überlastmodus bei geeigneter Endstufenregelung ohne signifikante Änderung des Spulenstroms erfolgen kann. Wird im Messmodus (m) anhand des gemessenen Spulenstroms I_{L} eine (drohende) Überlast detektiert (beispielsweise durch Überschreiten eines vorgegebenen Spannungs-Schwellwertes am Messwiderstand Wi), so kann die Reduzierung des Lastwiderstands und damit die Umschaltung in den Überlastmodus (u) durch einen einfachen Schaltvorgang nach einem der zuvor beschriebenen Beispiele sofort erfolgen. Da sich die zu kompensierende Last im eigentlichen Moment des Umschaltens nicht ändert, muss der erforderliche "Überlast" - Spulenstrom I_{Lu} zunächst übereinstimmen mit dem Spulenstrom I_{L} vor der Umschaltung. Aus dem Zusammenhang Uε = (I_{L} oder I_{Lu}) • Rw folgt bei nun reduziertem Lastwiderstand Rw und unverändertem Spulenstrom, dass die Regelung die Ausgangsspannung der Endstufe entsprechend schnell reduzieren muss, um den (unveränderten) Spulenstrom I_{LU} weiter zu liefern. Vorzugsweise erfolgt die Umschaltung "nahtlos", also ohne nennenswerte Schwankungen im Spulenstrom.

Vorzugsweise ist die Waage mit einer Spulenstrom-Regelung ausgestattet, die so ausgebildet ist, dass sich der erforderliche Spulenstrom innerhalb kürzester Zeit nach dem Umschalten (und der dabei auftretenden Widerstandsänderung) wieder korrekt einstellt. Das bedeutet, dass die Regelung den durch das Umschalten reduzierten Lastwiderstand sehr schnell "erkennt" und die Endstufenspannung entsprechend schnell anpasst, um wieder den nötigen Kompensationsstrom durch die Spule zu erzeugen. Dadurch wird die Relativbewegung zwischen Magnet und Spule unmittelbar nach dem Umschalten minimiert und eine nahezu unterbrechungsfreie Erfassung der jeweiligen Last gewährleistet.

Nach einer Ausführungsform der Erfindung ist die Waage beispielsweise so ausgelegt, dass sich der Spulenstrom I_{Lu} innerhalb von weniger als 500 ms, bevorzugt weniger als 200 ms, höchst bevorzugt weniger als 50 ms ab dem Umschaltezeitpunkt wieder auf den erforderlichen Kompensationsstrom einstellt, um mögliche Relativbewegungen zwischen Magnet und Spule binnen kürzester Zeit auszugleichen. Dadurch wird die quasi-kontinuierliche Erfassung einer die Wägezelle beaufschlagenden Kraft ermöglicht, während diese sich aus einem für den normalen Messmodus vorgesehenen Belastungsbereich heraus verändert hin zu einer Überlastkraft. Gleiches gilt für den umgekehrten Fall, dass sich eine Überlastkraft reduziert bis hinein in den im normalen Messmodus vorgesehenen Belastungsbereich. (Bei idealisierter Betrachtung ist der Kompensationsstrom - wie oben ausgeführt - vor und nach dem Umschalten identisch, I_{Im} = I_{Lu}. Dabei liegt jedoch die vereinfachte Annahme zugrunde, dass sich innerhalb eines sehr kurzen Zeitfensters, beginnend mit dem Moment des Umschaltens, die Last und damit der erforderliche Kompensationsstrom nicht oder nur unwesentlich ändert. Natürlich würde eine im normalen Messbetrieb (m) schlagartig bzw. innerhalb von wenigen Millisekunden aufgebrachte Überlast zu einer am Messwiderstand abgegriffenen Spannung mit steilem Gradienten führen, welche nach Erreichen des Umschalte-Schwellwertes weiter stark steigt und einen entsprechend weiter steigenden Kompensationsstrom erfordern würde. Die Bedingung I_{Im} = I_{Lu} wäre nur für ein infinitesimal kleines Zeitfenster gegeben, welches den Umschaltemoment mit umfasst. Die Gestaltung der entsprechend geeigneten Spulenstromregelung übernimmt der mit Regelungstechnologie vertraute Fachmann.

Eine Überlastkraft im Sinne der vorliegenden Erfindung ist dadurch definiert, dass sie einen im regulären Messbetrieb bzw. Messmodus (m) vorgesehenen Belastungsbereich über-, aber auch unterschreitet. So könnte zum Beispiel eine auf den Lastaufnehmer entgegen der üblichen Belastungsrichtung versehentlich eingebrachte Zugkraft den vorgesehenen Last-Messbereich unterschreiten. Auch eine solche Kraft soll im Sinne der Erfindung als Überlastkraft und ihr Einwirken auf die Waage als Überlastung verstanden werden.

Die erfindungsgemäße Veränderung des Lastwiderstands ist hauptsächlich darauf gerichtet, diesen zu reduzieren, um einen höheren Spulenstrom an der Endstufe abrufen zu können. Theoretisch denkbar ist jedoch auch der Fall, dass der Lastwiderstand vergrößert wird, beispielsweise um eine dann entlang der Widerstandsanordnung abgegriffene größer werdende Spannung mit höherer Genauigkeit ablesen zu können.

Die erfindungsgemäße Lastwiderstandsreduzierung erfolgt bevorzugt durch einen oder mehrere elektrische bzw. elektronische Schaltvorgänge. Bei den zur Durchführung dieser Schaltvorgänge verwendeten Komponenten kann es sich um unterschiedliche, dem Fachmann bekannte und geeignete Komponenten handeln. Infrage kommen nicht nur physikalisch und beispielsweise manuell bedienbare Schalter. Unter dem Begriff "Schalter" ist vielmehr jede denkbare Art von Hardware zu verstehen, welche zur Erzeugung der erfindungsgemäßen Lastwiderstandsreduzierung geeignet ist. Dazu zählen beispielsweise auch Halbleiterschalter, Relais, (Feldeffekt-) Transistoren oder Potentiometer.

Vorzugsweise sind einige der zuvor beschriebenen elektronischen Bauteile, insbesondere die Schalter und/oder Widerstände, bei Bedarf auch manuell oder automatisch, beispielsweise Software-gesteuert, betätigbar und/oder einstellbar, um je nach Anwendungsfall die gewünschte Konfiguration genau einstellen bzw. anpassen zu können.

In einer weniger vorteilhaften Ausführungsform wird der Lastwiderstand wenigstens teilweise gebildet von mehreren Spulen, die bevorzugt seriell geschaltet sind und wahlweise dem Lastwiderstand zugeschaltet oder davon getrennt werden können. Spulen haben den Nachteil, dass ihr Widerstand häufig stark temperaturabhängig ist und daher nachteiligen Einfluss nehmen kann auf das Messergebnis.

Nachfolgend sollen einige Ausführungsformen der Erfindung anhand von Figurenbeispielen näher erläutert werden. Dabei zeigen
- Figur 1: ein Magnetspulensystem einer Waage nach dem Stand der Technik;
- Figuren 2a bis 2d: verschiedene Schaltungen zur Reduzierung des Lastwiderstands mit einem oder zwei A/D-Wandlern;
- Figuren 3a, 3b: Weitere Ausführungsformen mit einem zweiten A/D-Wandler;

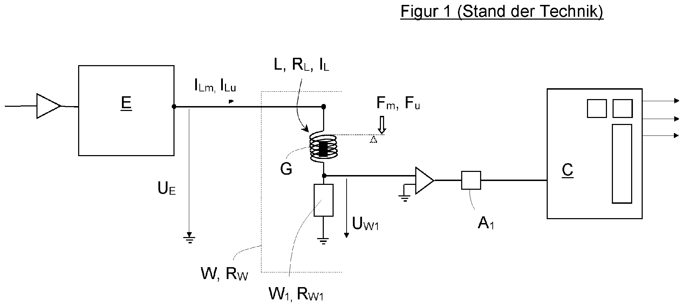

Figur 1 zeigt in vereinfachter schematische Darstellung das Messsystem einer Waage, die nach dem Prinzip der elektrodynamischen Kraftkompensation arbeitet und den Stand der Technik abbildet. Eine in einem vorgesehenen Last-Messbereich liegende Kraft Fₘ oder eine außerhalb dieses Last-Messbereichs liegende Überlastkraft F_{U} wirkt - beispielsweise über einen Hebel - auf eine Spule L ein, die sich relativ zu einem ortsfesten Magneten G bewegen kann. In diesem Beispiel ist der Magnet G ortsfest und die Spule L mit dem Hebel gekoppelt. Im unbelasteten Zustand befinden sich Spule L und Magnet G relativ zueinander in einer Ausgangslage. Von einer Endstufe E wird mit Hilfe eines nicht näher bezeichneten Lage-Sensors und einem Regler durch Regelung der Endstufenspannung Uε ein Spulenstrom I_{L} bereitgestellt, der durch die Spule L und einen mit der Spule in Reihe geschalteten Messwiderstand W₁ fließt. Der Spulenstrom I_{L} erzeugt durch elektrodynamische Wechselwirkung mit dem Magneten G eine Kompensationskraft, welche die durch die Kraft Fₘ, Fᵤ veranlasste Auslenkung der Spule relativ zum Magneten kompensiert und die Spule wieder in ihre Ausgangslage zurückdrängt.

In einem den regulären Betrieb der Waage darstellenden Messmodus (m) werden Kräfte Fₘ gemessen, die sich innerhalb eines vorgegebenen Last-Messbereichs bewegen. Am Messwiderstand W₁ wird dazu eine vom Spulenstrom I_{L} abhängige Messwiderstandspannung U_{W1} abgegriffen und über einen nicht näher bezeichneten Verstärker einem ersten A/D-Wandler A₁ mit einem zugehörigen Last-Messbereich B_{A1} zugeführt. Die vom ersten A/D-Wandler A₁ ausgegebenen Signale werden einer Steuereinheit C zur Auswertung und Ausgabe eines der Kraft Fₘ, Fᵤ entsprechenden Gewichtswertes zugeführt.

Die Spule L mit ihrem elektrischen Spulenwiderstand R_{L} und der Messwiderstand W₁ mit seinem elektrischen Messwiderstand R₁ werden seriell vom Spulenstrom I_{L} durchströmt und bilden gemeinsam eine auch als Lastwiderstand bezeichnete Widerstandsanordnung W mit einem elektrischen Widerstand Rw. Unter Berücksichtigung der maximal abrufbaren Leistung P_{E} der Endstufe (P_{E} = U_{E} • I_{L}) wird der Spulenstrom bestimmt und begrenzt von der Endstufenspannung Uε und dem Lastwiderstand Rw. Bei konstantem Lastwiderstand Rw ist der maximal mögliche Spulenstrom daher durch die Endstufe E festgelegt und diese wird in der Praxis so dimensioniert, dass innerhalb eines vorgesehenen Last-Messbereichs ein ausreichender Spulenstrom bereitgestellt werden kann. Für eine außerhalb dieses Last-Messbereichs liegende größere Kraft Fᵤ (Überlastkraft) kann die Endstufe keinen ausreichenden Kompensationsstrom liefern, die Spulenbewegung kann somit nicht kompensiert und die Messwiderstandsspannung nicht sinnvoll ausgewertet werden.

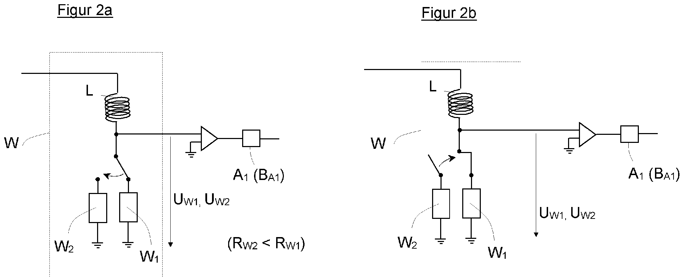

Erfindungsgemäß soll daher die Waage aus dem Messmodus (m) in einen Überlastmodus (u) umschaltbar sein. Dazu wird der elektrische Lastwiderstand R_{W} automatisch reduziert, um bei unveränderter Endstufenleistung einen höheren Spulenstrom I_{Lu} zu ermöglichen. Die Reduzierung des Lastwiderstands erfolgt vorzugsweise durch Reduzierung des elektrischen Messwiderstands R_{W1}. Verschiedene - nicht abschließend aufgeführte - Lösungen dazu sind in den Figuren 2a bis 2d beschrieben, in denen auf die erneute Darstellung mancher sich wiederholender Elemente gemäß Figur 1 verzichtet wurde:
Gemäß Figur 2a kann vom Messwiderstand W₁ auf einen Zusatzwiderstand W₂ so umgeschaltet werden, dass der ursprüngliche Messwiderstand W1 gänzlich aus der Widerstandsanordnung W bzw. dessen Lastwiderstand Rw herausgenommen wird. Der Spulenstrom wird nun durch den Zusatzwiderstand W₂ geleitet, dessen elektrischer Widerstand R_{W2} kleiner ist als R_{W1}. Der Abgriff der zu messenden Spannung (im Messmodus ist es U_{W1}, im Überlastmodus ist es U_{W2}) erfolgt hier oberhalb des schematisch dargestellten Schalters. Im Überlastmodus fällt am Zusatzwiderstand W₂ im Vergleich zum vorher wirksamen Messwiderstand W₁ eine geringere Spannung für den ersten A/D-Wandler A₁ ab, wodurch außer einer Traglasterweiterung (jetzt kann ein größerer Spulenstrom fließen) auch eine Messbereichserweiterung geschaffen wird. In Kenntnis der jeweils wirksamen elektrischen Widerstandswerte in der Widerstandsanordnung W lässt sich mithilfe der bzgl. Figur 1 genannten Steuereinheit die Überlast quantitativ ermitteln.

In der Lösung gemäß Figur 2b wird der Lastwiderstand Rw reduziert, indem zum Messwiderstand W₁ ein Zusatzwiderstand W₂ parallel geschaltet wird. Die zu Figur 2a beschriebenen Effekte ergeben sich hier sinngemäß genauso, wobei der Messwiderstand W₁ hier Teil der Widerstandsanordnung W bleibt.

Figur 2c zeigt eine besonders bevorzugte Ausführungsvariante einer erfindungsgemä-ßen Waage, die bereits in der vorstehenden Beschreibung erläutert wurde. Im Messmodus (m) werden Spannungswerte am Messwiderstand W₁ abgegriffen und dem ersten A/D-Wandler A₁ zugeführt und mithilfe einer hier nicht erneut dargestellten Steuereinheit C gemäß Figur 1 ausgewertet. Bei Umschaltung in den Überlastmodus (u) wird der Messwiderstand W₁ kurzgeschlossen.

Zur quantitativen Erfassung einer Überlast-Kraft Fᵤ ist in der Widerstandsanordnung W ein vom Spulenstrom durchflossener Zusatzwiderstand W₂ vorgesehen, an dem für einen vom ersten A/D-Wandler A₁ getrennt vorgesehenen zweiten A/D-Wandler A₂ eine Hilfsspannung U_{H} als Zusatzwiderstandsspannung U_{W2} abgegriffen und ausgewertet wird. Der elektrische Widerstand R_{W2} des Zusatzwiderstands W₂ ist deutlich kleiner als derjenige des Messwiderstands W₁, beispielsweise ist R_{W1} 50 oder 100 mal größer als R_{W2}. In der vereinfachten Darstellung gemäß Figur 2c und unter Vernachlässigung des elektrischen Widerstands der Spule L wird der Lastwiderstand im Überlastmodus (u) nur noch durch den Zusatzwiderstand W₂ gebildet, der einen 50 oder 100 mal größeren Spulenstrom I_{Lu} zulässt (Traglasterweiterung). Die von ihm erzeugte und am Zusatzwiderstand W₂ abfallende Zusatzwiderstandsspannung U_{W2} kann über den zweiten A/D-Wandler und die Steuereinheit C quantitativ ausgewertet werden, wodurch 50 oder 100 mal größere Überlastkräfte als im Messmodus sowohl kompensiert als auch quantitativ bestimmt werden können.

Die Variante nach Figur 2d zeigt einen Messwiderstand W₁, der sich aus zwei nicht näher bezeichneten seriellen Einzel-Widerständen zusammensetzt. Einer dieser Einzelwiderstände lässt sich über einen Schalter kurzschließen, wodurch sich der elektrische Messwiderstand R_{W1} und damit auch der elektrische Lastwiderstand R_{W} reduziert.

Wie am Beispiel von Figur 2c bereits gezeigt wurde, kann statt des ersten A/D-Wandlers auch ein davon unabhängiger zweiter A/D-Wandler A₂ verwendet werden, um das Überschreiten eines eine Überlast signalisierenden Schwellwertes zu erfassen und/oder insbesondere Überlastkräfte quantitativ zu messen.

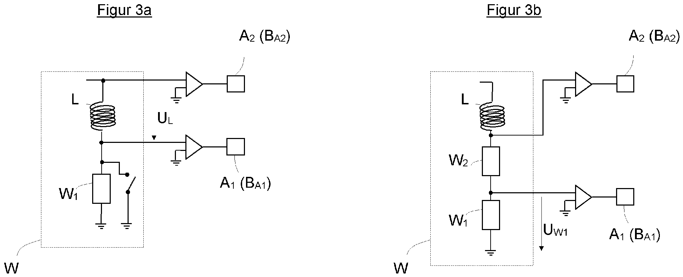

Figur 3a zeigt ein Ausführungsbeispiel, bei dem einem zusätzlichen zweiten A/D-Wandler A₂ mit einem zugehörigen Last-Messbereich B_{A2} eine an der Widerstandsanordnung abgegriffenen Spannung zugeführt wird, die sich von der für den Messmodus abgegriffenen Widerstandsmessspannung U_{W1} unterscheidet und im Überlastmodus - anders als im Beispiel nach Figur 2c - aus dem elektrischen Spulenwiderstand R_{L} ergibt.

Wie im Beispiel nach Figur 2c kann der zweite A/D-Wandler gemäß Figur 3a unabhängig vom ersten A/D-Wandler und sowohl im Messmodus (m) als auch in Überlastmodus (u) zur Überwachung von Schwellwertüberschreitungen und zur Ermittlung der wirkenden Kräfte Fₘ, Fᵤ verwendet werden. Der Last-Messbereich B_{A2} kann den ersten Last-Messbereich B_{A1} umfassen und ausreichend groß festgelegt werden, um auch eine Überlast quantitativ zu erfassen, die nicht mehr im Last-Messbereich B_{A1} des ersten A/D-Wandlers liegt, der hier nur für die Auswertung im Messmodus (m) vorgesehen ist. Der zweite Last-Messbereich B_{A2} kann auch speziell auf Spannungswerte oberhalb des ersten Last-Messbereichs B_{A1} zugeschnitten sein, um nur in diesem Bereich Schwellwerte zu überwachen oder die Überlastkräfte zu messen. Je nach Art der Lastwiderstandsreduzierung fällt in der Schaltung nach Figur 3a am zweiten A/D-Wandler A₂ im Überlastmodus (u) zumindest noch eine durch den Spulenwiderstand erzeugte Spulenspannung U_{L} ab.

Eine abgewandelte Variante ist in Figur 3b dargestellt. Hier wird dem zweiten A/D-Wandler diejenige Spannung zugeführt, welche über die beiden in Serie geschalteten Widerstände W₁ (Messwiderstand) und W₂ (Zusatzwiderstand) insgesamt abfällt. Sollte der Messwiderstand W₁ durch die Umschaltung in den Überlastmodus (u) reduziert oder kurzgeschlossen werden (analog zum Figuren-Beispiel 2c), so bestimmt der elektrische Widerstand R_{W2} des Zusatzwiderstand W₂ im Wesentlichen die dem zweiten A/D-Wandler A₂ zugeführte Spannung.

### Bezugszeichen

- W₁: Messwiderstand
- W₂: Zusatzwiderstand
- W: Widerstandsanordnung
- A₁: erster A/D-Wandler
- A₂: zweiter A/D-Wandler
- C: Steuereinheit
- E: Endstufe
- Fₘ: Kraft innerhalb eines vorgegebenen Belastungsbereichs
- Fᵤ: Kraft außerhalb des vorgegebenen Belastungsbereichs, Überlast-Kraft
- G: Magnet
- I_{L}: Tragspulenstrom
- I_{L}.: Überlast-Spulenstrom
- I_{Lm}: Spulenstrom im Messmodus
- L: Tragspule

- B_{A1}: Last-Messbereich des ersten A/D-Wandlers A₁
- B_{A2}: Last-Messbereich des zweiten A/D-Wandlers A₂

- R_{W1}: elektrischer Widerstand des Messwiderstands 1
- R_{W2}: elektrischer Widerstand des Zusatzwiderstands 2
- Rw: elektrischer Widerstand der Widerstandsanordnung W (Lastwiderstand)
- R_{L}: elektrischer Widerstand der Tragspule L

- U_{W1}: Messwiderstandsspannung
- U_{W2}: Zusatzwiderstandsspannung
- U_{H}: Hilfsspannung
- U_{E}: Endstufenspannung
- U_{L}: Spulenspannung
- (m): Index für Messmodus
- U(): Index für Überlastmodus

## Patentansprüche

1. Waage, die zur Ermittlung einer auf die Waage einwirkenden Kraft (Fₘ, Fᵤ) nach dem Prinzip der elektrodynamischen Kraftkompensation arbeitet und dazu eine Tragspule (L) und einen Magneten (G) aufweist, die miteinander wechselwirkend und in einer Relativbewegung zueinander beweglich sind, wobei der Tragspule (L) von einer Endstufe (E) ein Tragspulenstrom (I_{L}) als Kompensationsstrom zuführbar ist, um durch elektrodynamische Wechselwirkung zwischen Spule (L) und Magnet (G) die Kraft (Fₘ, Fᵤ) zu kompensieren und den Spulenstrom (I_{L}) zur Ermittlung der Kraft (Fₘ, Fᵤ) auswerten zu können,
a) wobei die Waage eine Widerstandsanordnung (W) umfasst, welche für einen von der Endstufe (E) gespeisten Tragspulenstromkreis einen elektrischen Lastwiderstand (Rw) bildet, und wobei die Widerstandsanordnung (W) die Tragspule (L) mit ihrem elektrischen Widerstand (R_{L}) sowie wenigstens einen Messwiderstand (W₁) mit seinem elektrischen Widerstand (R_{W1}) umfasst,
b) und wobei die Waage dazu ausgebildet ist, in einem Messmodus (m) für Kräfte (Fₘ) innerhalb eines vorgegebenen Belastungsbereichs aus einer am Messwiderstand (W₁) abfallenden Messwiderstandsspannung (U_{W1}) einen der jeweiligen Kraft (Fₘ) zugehörigen Messwert zu ermitteln,
**dadurch gekennzeichnet,**
c) **dass** die Waage zur Minimierung der Relativbewegung dazu ausgebildet ist, bei Überlast-Kräften (Fᵤ), welche den vorgegebenen Belastungsbereich über- oder unterschreiten (Überlastung), zur Erfassung der Überlast-Kraft (Fᵤ) aus dem Messmodus (m) in einen Überlastmodus (u) dadurch umzuschalten, dass der elektrische Lastwiderstand (Rw) bei Überlastung reduziert wird (Lastwiderstandsreduzierung) und die Endstufe (E) die Tragspule (L) mit einem die Überlast-Kraft (Fu) kompensierenden Überlastspulenstrom (I_{Lu}) versorgt.

2. Waage nach Anspruch 1, wobei die Waage zur Bestimmung der Überlast-Kraft (Fᵤ) dazu ausgebildet ist, während der Überlastung den Überlastspulenstrom (I_{Lu}) mittels Abgriff einer Spannung (U_{W1}, U_{W2}, U_{H}) an der Widerstandsanordnung (W) sowie Einspeisung der abgegriffenen Spannung (U_{W1}, U_{W2}, U_{H}) in einen AD-Wandler (A₁, A₂) quantitativ zu ermitteln.

3. Waage nach einem der vorhergehenden Ansprüche, **dadurch gekennzeichnet, dass** wenigstens ein erster A/D-Wandler (A₁) mit einem Last-Messbereich (B_{A1}) vorgesehen ist, dem im Messmodus (m) die Messwiderstandsspannung (U_{W1}) zugeführt wird, wobei der Übergang von einer Kraft (Fₘ) innerhalb des vorgegebenen Belastungsbereichs zu einer Überlast-Kraft (Fᵤ) außerhalb des vorgegebenen Belastungsbereichs oder umgekehrt dadurch detektierbar ist,
a) dass die Messwiderstandsspannung (U_{W1}) einen vorgebbaren Schwellwert des Last-Messbereichs (B_{A1}) des ersten A/D-Wandlers (A₁) überschreitet oder unterschreitet, oder
b) dass ein zweiter A/D-Wandler (A₂) mit einem Last-Messbereich (B_{A2}) vorgesehen ist, dem im Messmodus (m) eine an der Widerstandsanordnung (W) abgegriffene Hilfsspannung (U_{W2}, U_{H}) zugeführt wird, und diese Hilfsspannung einen vorgebbaren Schwellwert des Last-Messbereichs (B_{A2}) überschreitet oder unterschreitet.

4. Waage nach Variante b) des vorhergehenden Anspruchs, wobei der Last-Messbereich (B_{A2}) des zweiten A/D-Wandlers (A₂) größer gewählt ist als der Last-Messbereich (B_{A1}) des ersten A/D-Wandlers (A₁).

5. Waage nach einem der vorigen Ansprüche, **dadurch gekennzeichnet, dass** der Lastwiderstand (R_{W}) reduzierbar ist, indem
a) der Messwiderstand (W₁) kurzgeschlossen wird, oder
b) ein Zusatzwiderstand (W₂) mit einem elektrischen Widerstand (R_{W2}) den Messwiderstand (W₁) ersetzt, wobei gilt R_{W1} > R_{W2}, oder
c) indem ein Zusatzwiderstand (R₂) parallel zum Messwiderstand (R₁) geschaltet wird.

6. Waage nach einem der vorigen Ansprüche, wobei sich der elektrische Widerstand (Rw) der Widerstandsanordnung (W) durch die Lastwiderstandsreduzierung reduziert um mindestens 50 %, vorzugsweise um mindestens 80 %, besonders bevorzugt um mindestens 90 %, höchst vorzugsweise um mehr als 95 %.

7. Waage nach einem der vorigen Ansprüche, umfassend einen ersten A/D-Wandler (A₁) mit einem Last-Messbereich (B_{A1}), dem im Messmodus die Messwiderstandsspannung (U_{W1}) zugeführt wird, wobei die Waage dazu ausgebildet ist,
a) bei Überschreiten eines ersten, vorgebbaren Schwellwerts, der eine Überlastung signalisiert, in den Überlastmodus (u) umzuschalten,
a1) um die dadurch reduzierte Messwiderstandsspannung (U_{W1}) dem ersten A/D-Wandler (A₁) zur Ermittlung der Überlast-Kraft (Fu) zuzuführen, oder
a2) um eine an der Widerstandsanordnung (W) abgegriffene Hilfsspannung (U_{H}, U_{W2}) einem zweiten A/D-Wandler (A₂) mit einem Last-Messbereich (B_{A2}) zur Ermittlung der Überlast-Kraft (Fᵤ) zuzuführen,
und
b) bei Unterschreiten des zuvor überschrittenen ersten Schwellwertes oder eines vorzugweise mit einem zweiten A/D-Wandler (A₂) erfassten, vorgebbaren zweiten Schwellwertes aus dem Überlastmodus (u) in den Messmodus (m) zurückzuschalten.

8. Waage nach einem der vorigen Ansprüche, umfassend eine den Spulenstrom (I_{L}, I_{Lm}, I_{Lu}) bereitstellende Endstufe (E), wobei die Endstufe (E) dazu ausgelegt ist, den im Messmodus (m) durch die Widerstandsanordnung (W) fließenden Strom (I_{Lm}) im Überlastmodus (u) auf einen Überlast-Spulenstrom (I_{Lu}) mindestens zu verdoppeln, vorzugsweise mindestens zu verfünffachen.

9. Waage nach einem der vorigen Ansprüche, umfassend eine Spulenstromregelung, die so ausgelegt ist, dass sich unmittelbar nach dem Umschalten vom Messmodus in den Überlastmodus oder umgekehrt der Spulenstrom (I_{Lm}, I_{Lu}) innerhalb von weniger als 500 ms, bevorzugt weniger als 200 ms, höchst bevorzugt weniger als 50 ms ab dem Umschaltezeitpunkt auf den erforderlichen Kompensationsstrom einstellt.

10. Verfahren zum Betreiben einer nach dem Prinzip der elektrodynamisch Kraftkompensation arbeitenden Waage, auf deren Lastaufnehmer eine Kraft (Fₘ, Fᵤ) einwirkt,
a) wobei die Waage eine Tragspule (L) und einen Magneten (G) aufweist, die miteinander wechselwirken und in einer Relativbewegung zueinander beweglich sind, und
b) wobei der Tragspule (L) von einer Endstufe (E) ein Tragspulenstrom (I_{L}) zuführbar ist, um durch elektrodynamische Wechselwirkung zwischen Spule (L) und Magnet (G) die Kraft (F) zu kompensieren und den Spulenstrom (I_{L}) zur Ermittlung der Kraft (F) auswerten zu können, und
c) wobei die Waage eine Widerstandsanordnung (W) umfasst, welche für einen von der Endstufe (E) gespeisten Tragspulenstromkreis einen elektrischen Lastwiderstand (Rw) bildet, und wobei die Widerstandsanordnung (W) die Tragspule (L) mit ihrem elektrischen Widerstand (R_{L}) sowie wenigstens einen Messwiderstand (W₁) mit seinem elektrischen Widerstand (R_{W1}) umfasst, und
d) wobei die Waage dazu ausgebildet ist, in einem Messmodus (m) für Kräfte (Fₘ) innerhalb eines vorgegebenen Belastungsbereichs aus einer am Messwiderstand (W₁) abfallenden Messwiderstandsspannung (U_{W1}) einen der jeweiligen Kraft (Fₘ) zugehörigen Messwert zu ermitteln,
umfassend folgende Verfahrensschritte:
i) Detektieren einer Überlast-Kraft (Fᵤ), welche den vorgegebenen Belastungsbereich über- oder unterschreitet (Überlastung),
ii) Umschaltung in einen Überlastmodus (u) dadurch, dass der elektrische Lastwiderstand (Rw) vorzugsweise automatisch reduziert wird, um die Relativbewegung zu minimieren.

11. Verfahren nach dem vorhergehenden Anspruch, **dadurch gekennzeichnet, dass** die Endstufe (E) die Tragspule (L) nach dem Umschalten in den Überlastmodus (u) mit einem die Überlast-Kraft (Fᵤ) kompensierenden Überlastspulenstrom (I_{Lu}) versorgt, um eine vom Überlastspulenstrom (I_{Lu}) abhängige Messgröße, insbesondere eine einem A/D-Wandler (A₁, A₂) zugeführte Spannung (U_{W1}, U_{W2}, U_{H}) zur Bestimmung der Überlast-Kraft (Fᵤ) auszuwerten.

12. Verfahren nach einem der vorhergehenden Verfahrensansprüche, **dadurch gekennzeichnet, dass** der elektrische Lastwiderstand (R_{W}) verändert wird, indem
a) der Messwiderstand (W₁) kurzgeschlossen wird, oder
b) ein Zusatzwiderstand (W₂) mit einem elektrischen Widerstand (R_{W2}) den Messwiderstand (W₁) ersetzt, wobei gilt R_{W1} > R_{W2}, oder
c) indem ein Zusatzwiderstand (R₂) parallel zum Messwiderstand (R₁) geschaltet wird.

## Claims

1. Scales which operate according to the principle of electrodynamic force compensation to determine a force (Fₘ, Fᵤ) acting on the scales and for this purpose have a carrying coil (L) and a magnet (G) which interact with one another and can move relative to one another in a relative movement, wherein a carrying coil current (I_{L}) can be supplied to the carrying coil (L) from an output stage (E) as a compensation current in order to compensate for the force (Fₘ, Fᵤ) by electrodynamic interaction between the coil (L) and magnet (G) and to be able to evaluate the coil current (I_{L}) to determine the force (Fₘ, Fᵤ),
a) wherein the scales comprise a resistor arrangement (W) which forms an electrical load resistance (Rw) for a carrying coil circuit fed by the output stage (E), and wherein the resistor arrangement (W) comprises the carrying coil (L) with its electrical resistance (R_{L}) and at least one measuring resistor (W₁) with its electrical resistance (R_{W1}),
b) and wherein the scales are designed to determine a measurement value associated with the relevant force (Fₘ) in a measuring mode (m) for forces (Fₘ) within a predetermined load range from a measuring resistor voltage (U_{W1}) dropping across the measuring resistor (W₁),
**characterized in that**
c) in order to minimize the relative movement, the scales are designed to switch from the measuring mode (m) to an overload mode (u) in the event of overload forces (Fᵤ) which exceed or fall below the specified load range (overload) in order to detect the overload force (Fᵤ), **in that** the electrical load resistance (Rw) is reduced in case of overload (load resistance reduction) and the output stage (E) supplies the carrying coil (L) with an overload coil current (I_{Lu}) compensating for the overload force (Fᵤ).

2. Scales according to claim 1, wherein, in order to determine the overload force (Fᵤ), the scales are designed to quantitatively determine the overload coil current (I_{Lu}) during the overload by means of tapping a voltage (U_{W1}, U_{W2}, U_{H}) at the resistor arrangement (W) and feeding the tapped voltage (U_{W1}, U_{W2}, U_{H}) into an AD converter (A₁, A₂).

3. Scales according to any one of the preceding claims, **characterized in that** at least a first A/D converter (A₁) with a load measuring range (B_{A1}) is provided, to which the measuring resistor voltage (U_{W1}) is supplied in the measuring mode (m), wherein the transition from a force (Fₘ) within the specified load range to an overload force (Fᵤ) outside the specified load range or vice versa is detectable
a) **in that** the measuring resistor voltage (U_{W1}) exceeds or falls below a specifiable threshold value of the load measuring range (B_{A1}) of the first A/D converter (A₁), or
b) **in that** a second A/D converter (A₂) with a load measuring range (B_{A2}) is provided, to which an auxiliary voltage (U_{W2}, U_{H}) tapped at the resistor arrangement (W) is supplied in the measuring mode (m), and this auxiliary voltage exceeds or falls below a specifiable threshold value of the load measuring range (B_{A2}).

4. Scales according to variant b) of the preceding claim, wherein the load measuring range (B_{A2}) of the second A/D converter (A₂) is selected to be larger than the load measuring range (B_{A1}) of the first A/D converter (A₁).

5. Scales according to any one of the preceding claims,
**characterized in that** the load resistance (Rw) can be reduced by
a) the measuring resistor (W₁) being short-circuited, or
b) an additional resistor (W₂) with an electrical resistance (R_{W2}) replacing the measuring resistor (W₁), where R_{W1} > R_{W2}, or
c) an additional resistor (R₂) being connected in parallel with the measuring resistor (R₁).

6. Scales according to any one of the preceding claims, wherein the electrical resistance (Rw) of the resistor arrangement (W) is reduced as a result of the load resistance reduction by at least 50%, preferably by at least 80%, particularly preferably by at least 90%, most preferably by more than 95%.

7. Scales according to any one of the preceding claims, comprising a first A/D converter (A₁) with a load measuring range (B_{A1}), to which the measuring resistor voltage (U_{W1}) is supplied in the measuring mode, wherein the scales are designed
a) to switch to overload mode (u) when a first, specifiable threshold value signaling an overload is exceeded,
a1) to supply the resulting reduced measuring resistor voltage (U_{W1}) to the first A/D converter (A₁) to determine the overload force (Fu),
or
a2) to supply an auxiliary voltage (U_{H}, U_{W2}) tapped at the resistor arrangement (W) to a second A/D converter (A₂) with a load measuring range (B_{A2}) to determine the overload force (Fᵤ),
and
b) to switch back from the overload mode (u) to the measuring mode (m) when the value falls below the previously exceeded first threshold value or a specifiable second threshold value preferably detected with a second A/D converter (A₂).

8. Scales according to any one of the preceding claims, comprising an output stage (E) providing the coil current (I_{L}, I_{Lm}, I_{Lu}), wherein the output stage (E) is designed to at least double, preferably at least quintuple, the current (I_{Lm}) flowing through the resistor arrangement (W) in the measuring mode (m) for an overload coil current (I_{Lu}) in the overload mode (u).

9. Scales according to any one of the preceding claims, comprising coil current control which is designed in such a way that, immediately after switching from the measuring mode to the overload mode or vice versa, the coil current (I_{Lm}, I_{Lu}) adjusts to the required compensation current within less than 500 ms, preferably less than 200 ms, most preferably less than 50 ms from the switching time.

10. Method for operating scales which operate according to the principle of electrodynamic force compensation, on the load receptor of which a force (Fₘ, Fᵤ) acts,
a) wherein the scales comprise a carrying coil (L) and a magnet (G) which interact with one another and are movable relative to one another in a relative movement, and
b) wherein a carrying coil current (I_{L}) can be supplied to the carrying coil (L) from an output stage (E) in order to compensate for the force (F) by electrodynamic interaction between the coil (L) and magnet (G) and to be able to evaluate the coil current (I_{L}) to determine the force (F), and
c) wherein the scales comprise a resistor arrangement (W) which forms an electrical load resistance (Rw) for a carrying coil circuit fed by the output stage (E), and wherein the resistor arrangement (W) comprises the carrying coil (L) with its electrical resistance (R_{L}) and at least one measuring resistor (W₁) with its electrical resistance (R_{W1}), and
d) wherein the scales are designed to determine a measurement value associated with the relevant force (Fₘ) in a measuring mode (m) for forces (Fₘ) within a predetermined load range from a measuring resistor voltage (U_{W1}) dropping across the measuring resistor (W₁),
comprising the following method steps:
i) detecting an overload force (Fᵤ) that exceeds or falls below the specified load range (overload),
ii) switching to an overload mode (u) in that the electrical load resistance (Rw) is preferably reduced automatically to minimize the relative movement.

11. Method according to the preceding claim, **characterized in that,** after switching to the overload mode (u), the output stage (E) supplies the carrying coil (L) with an overload coil current coil (I_{Lu}) which compensates for the overload force (Fᵤ), in oder to evaluate a measurement variable which is dependent on the overload coil current (I_{Lu}), in particular a voltage (U_{W1}, U_{W2}, U_{H}) supplied to an A/D converter (A₁, A₂) in order to determine the overload force (Fᵤ).

12. Method according to any one of the preceding method claims,
**characterized in that** the electrical load resistance (Rw) is changed by
a) the measuring resistor (W₁) being short-circuited, or
b) an additional resistor (W₂) with an electrical resistance (R_{W2}) replacing the measuring resistor (W₁), where R_{W1} > R_{W2}, or
c) an additional resistor (R₂) being connected in parallel with the measuring resistor (R₁).

## Revendications

1. Balance qui, pour la détermination d'une force (Fₘ, Fᵤ) agissant sur la balance, fonctionne selon le principe de la compensation de force électrodynamique et présente à cet effet une bobine porteuse (L) et un aimant (G) qui interagissent l'un avec l'autre et sont mobiles l'un par rapport à l'autre dans un mouvement relatif, dans laquelle un courant de bobine porteuse (I_{L}) peut être amené à la bobine porteuse (L) par un étage final (E) en tant que courant de compensation, afin de compenser la force (Fₘ, Fᵤ) par interaction électrodynamique entre la bobine (L) et l'aimant (G) et afin de pouvoir évaluer le courant de bobine (I_{L}) pour la détermination de la force (Fₘ, Fᵤ),
a) dans laquelle la balance comprend un système formant résistance (W) qui forme une résistance de charge électrique (Rw) pour un circuit de bobine porteuse alimenté par l'étage final (E), et dans laquelle le système formant résistance (W) comprend la bobine porteuse (L) avec sa résistance électrique (R_{L}) ainsi qu'au moins une résistance de mesure (W₁) avec sa résistance électrique (R_{W1}),
b) et dans laquelle la balance est configurée pour déterminer, dans un mode de mesure (m) pour des forces (Fₘ) à l'intérieur d'une plage de charge prédéfinie, à partir d'une tension de résistance de mesure (U_{W1}) chutant au niveau de la résistance de mesure (W₁), une valeur de mesure associée à la force (Fₘ) respective,
**caractérisée en ce que**
c) la balance est configurée pour minimiser le mouvement relatif en cas de forces de surcharge (Fᵤ) surpassant ou n'atteignant pas la plage de charge prédéfinie (surcharge), pour détecter la force de surcharge (Fᵤ) en passant du mode de mesure (m) à un mode de surcharge (u), **en ce que** la résistance de charge électrique (Rw) est réduite en cas de surcharge (réduction de résistance de charge) et l'étage final (E) fournit un courant de bobine de surcharge (I_{Lu}) qui compense la force de surcharge (Fᵤ) à la bobine porteuse (L).

2. Balance selon la revendication 1, dans laquelle la balance, pour la définition de la force de surcharge (Fᵤ), est configurée pour déterminer quantitativement le courant de bobine de surcharge (I_{Lu}) pendant la surcharge au moyen d'une prise de tension (U_{W1}, U_{W2}, U_{H}) au niveau du système formant résistance (W) ainsi que d'une alimentation de la tension (U_{W1}, U_{W2}, U_{H}) prise dans un convertisseur analogique-numérique (A₁, A₂).

3. Balance selon l'une des revendications précédentes,
**caractérisée en ce qu'**au moins un premier convertisseur analogique-numérique (A₁) comportant une plage de mesure de charge (B_{A1}) est prévu, auquel est amenée la tension de résistance de mesure (U_{W1}) en mode de mesure (m), dans laquelle la transition d'une force (Fₘ) à l'intérieur de la plage de charge prédéfinie à une force de surcharge (Fᵤ) en dehors de la plage de charge prédéfinie ou inversement peut ainsi être détectée,
a) **en ce que** la tension de résistance de mesure (U_{W1}) dépasse ou n'atteint pas une valeur seuil pouvant être prédéfinie de la plage de mesure de charge (B_{A1}) du premier convertisseur analogique-numérique (A₁), ou
b) **en ce qu**'un second convertisseur analogique-numérique (A₂) comportant une plage de mesure de charge (B_{A2}) est prévu, auquel est amenée une tension auxiliaire (U_{W2}, U_{H}) prise au niveau du système formant résistance (W) en mode de mesure (m), et ladite tension auxiliaire dépasse ou n'atteint pas une valeur seuil pouvant être prédéfinie de la plage de mesure de charge (B_{A2}).

4. Balance selon la variante b) de la revendication précédente, dans laquelle la plage de mesure de charge (B_{A2}) du second convertisseur analogique-numérique (A₂) est choisie de manière à être plus grande que la plage de mesure de charge (B_{A1}) du premier convertisseur analogique-numérique (A₁).

5. Balance selon l'une des revendications précédentes,
**caractérisée en ce que** la résistance de charge (Rw) peut être réduite en
a) court-circuitant la résistance de mesure (W₁), ou
b) remplaçant la résistance de mesure (W₁) par une résistance supplémentaire (W₂) comportant une résistance électrique (R_{W2}), dans laquelle R_{W1} > R_{W2}, ou
c) en branchant une résistance supplémentaire (R₂) parallèlement à la résistance de mesure (R₁).

6. Balance selon l'une des revendications précédentes, dans laquelle la résistance électrique (Rw) du système formant résistance (W) est réduite d'au moins 50 %, de préférence d'au moins 80 %, de manière particulièrement préférée d'au moins 90 %, de manière extrêmement préférée de plus de 95 %, par la réduction de résistance de charge.

7. Balance selon l'une des revendications précédentes, comprenant un premier convertisseur analogique-numérique (A₁) comportant une plage de mesure de charge (B_{A1}) à laquelle est amenée la tension de résistance de mesure (U_{W1}) en mode de mesure, dans laquelle la balance est configurée pour
a) passer en mode de surcharge (u) lorsqu'une première valeur seuil pouvant être prédéfinie est dépassée, signalant une surcharge,
a1) afin d'amener la tension de résistance de mesure (U_{W1}) ainsi réduite au premier convertisseur analogique-numérique (A₁) pour la détermination de la force de surcharge (Fᵤ),
ou
a2) afin d'amener une tension auxiliaire (U_{H}, U_{W2}) prise au niveau du système formant résistance (W) à un second convertisseur analogique-numérique (A₂) comportant une plage de mesure de charge (B_{A2}) pour la détermination de la force de surcharge (Fᵤ),
et
b) repasser du mode de surcharge (u) au mode de mesure (m) lorsque la première valeur seuil précédemment dépassée ou qu'une seconde valeur seuil pouvant être prédéfinie, de préférence détectée au moyen d'un second convertisseur analogique-numérique (A₂), n'est pas atteinte.

8. Balance selon l'une des revendications précédentes, comprenant un étage final (E) mettant à disposition le courant de bobine (I_{L}, I_{Lm}, I_{Lu}), dans laquelle l'étage final (E) est configuré pour au moins doubler, de préférence au moins quintupler, le courant (I_{Lm}) circulant à travers le système formant résistance (W) en mode de mesure (m) en un courant de bobine de surcharge (I_{Lu}) en mode de surcharge (u).

9. Balance selon l'une des revendications précédentes, comprenant une régulation de courant de bobine qui est configurée de sorte que, immédiatement après le passage du mode de mesure au mode de surcharge ou inversement, le courant de bobine (I_{Lm}, I_{Lu}) s'ajuste au courant de compensation requis en moins de 500 ms, de préférence en moins de 200 ms, de manière extrêmement préférée en moins de 50 ms à partir du moment de passage.

10. Procédé permettant de faire fonctionner une balance fonctionnant selon le principe de la compensation de force électrodynamique, sur le récepteur de charge de laquelle agit une force (Fₘ, Fᵤ),
a) dans lequel la balance présente une bobine porteuse (L) et un aimant (G) qui interagissent l'un avec l'autre et sont mobiles l'un par rapport à l'autre dans un mouvement relatif, et
b) dans lequel un courant de bobine porteuse (I_{L}) peut être amené à la bobine porteuse (L) par un étage final (E) afin de compenser la force (F) par interaction électrodynamique entre la bobine (L) et l'aimant (G) et afin de pouvoir évaluer le courant de bobine (I_{L}) pour la détermination de la force (F), et
c) dans lequel la balance comprend un système formant résistance (W) qui forme une résistance de charge électrique (Rw) pour un circuit de bobine porteuse alimenté par l'étage final (E), et dans lequel le système formant résistance (W) comprend la bobine porteuse (L) avec sa résistance électrique (R_{L}) ainsi qu'au moins une résistance de mesure (W₁) avec sa résistance électrique (R_{W1}), et
d) dans lequel la balance est configurée pour déterminer, dans un mode de mesure (m) pour des forces (Fₘ) à l'intérieur d'une plage de charge prédéfinie, à partir d'une tension de résistance de mesure (U_{W1}) chutant au niveau de la résistance de mesure (W₁), une valeur de mesure associée à la force (Fₘ) respective,
comprenant les étapes de procédé suivantes :
i) détection d'une force de surcharge (Fᵤ) qui dépasse ou n'atteint pas la plage de charge prédéfinie (surcharge),
ii) passage à un mode de surcharge (u) en réduisant de préférence automatiquement la résistance de charge électrique (Rw) afin de minimiser le mouvement relatif.

11. Procédé selon la revendication précédente, **caractérisé en ce que** l'étage final (E) fournit un courant de bobine de surcharge (I_{Lu}) qui compense la force de surcharge (Fᵤ) à la bobine porteuse (L) après le passage en mode de surcharge (u), afin d'évaluer une grandeur de mesure dépendant du courant de bobine de surcharge (I_{Lu}), en particulier une tension (U_{W1}, U_{W2}, U_{H}) amenée à un convertisseur analogique-numérique (A₁, A₂) pour la définition de la force de surcharge (Fᵤ).

12. Procédé selon l'une des revendications de procédé précédentes,
**caractérisé en ce que** la résistance de charge électrique (Rw) est modifiée en
a) court-circuitant la résistance de mesure (W₁), ou
b) remplaçant la résistance de mesure (W₁) par une résistance supplémentaire (W₂) comportant une résistance électrique (R_{W2}), dans laquelle R_{W1} > R_{W2}, ou
c) en branchant une résistance supplémentaire (R₂) parallèlement à la résistance de mesure (R₁).
